# EUROPÄISCHE PATENTSCHRIFT

(11) **EP 1 246 873 B1**
(45) Veröffentlichungstag und Bekanntmachung des Hinweises auf die Patenterteilung: **26.01.2005**
(21) Anmeldenummer: 00992739.3
(22) Anmeldetag: 14.10.2000
(51) Int. Cl.: C09D 5/08, C09D 5/24

(54) **LEITFÄHIGE, ORGANISCHE BESCHICHTUNGEN**
CONDUCTIVE ORGANIC COATINGS
REVETEMENTS ORGANIQUES CONDUCTEURS

(30) Priorität: 23.10.1999 DE 19951133
(43) Veröffentlichungstag der Anmeldung: 09.10.2002
(73) Patentinhaber: Henkel Kommanditgesellschaft auf Aktien, 40589 Düsseldorf-Holthausen (DE)
(72) Erfinder: LORENZ, Wolfgang, 40699 Erkrath (DE); KUNZ, Andreas, 42855 Remscheid (DE); WILKE, Eva, 42781 Haan (DE)
(86) Internationale Anmeldenummer: PCT/EP2000/010124
(87) Internationale Veröffentlichungsnummer: WO 2001/030923

(56) Entgegenhaltungen:
- EP-A- 0 548 373
- EP-A- 0 877 062
- DE-A- 19 748 764
- DE-A- 19 755 349

## Beschreibung

Die vorliegende Erfindung betrifft leitfähige und schweißbare Korrosionsschutzzusammensetzungen zur Beschichtung von Metalloberflächen sowie ein Verfahren zu Beschichtung von Metalloberflächen mit elektrisch leitfähigen organischen Beschichtungen.

In der metallverarbeitenden Industrie, insbesondere beim Bau von Kraftfahrzeugen müssen die metallischen Bestandteile der Erzeugnisse vor Korrosion geschützt werden. Nach herkömmlichem Stand der Technik werden dabei die Bleche im Walzwerk zunächst mit Korrosionsschutzölen beschichtet und vor der Verformung und dem Stanzen ggf. mit Ziehfetten beschichtet. Im Kraftfahrzeugbau werden dabei für die Karosserie bzw. Karosserieteile entsprechend geformte Blechteile ausgestanzt und unter Verwendung von besagten Ziehfetten oder -ölen im Tiefziehverfahren verformt, dann im allgemeinen durch Schweißen und/oder Bördeln und/oder Kleben zusammengefügt und anschließend aufwendig gereinigt Daran schließen sich die korrosionsschützenden Oberflächenvorbehandlungen wie Phosphatierung und/oder Chromatierung an, worauf eine erste Lackschicht mittels Elektrotauchlackierung auf die Bauteile aufgebracht wird. In der Regel folgt dieser ersten Elektrotauchlackierung, insbesondere im Falle von Automobilkarosserien, die Aufbringung mehrerer weiterer Lackschichten.

In der metallverarbeitenden Industrie wie beispielsweise im Fahrzeug- und Haushaltsgerätebau besteht aus Gründen der Prozeßvereinfachung der Wunsch, den Aufwand für die chemische Korrosionsschutzbehandlung zu verringern. Dies kann dadurch geschehen, daß Rohmaterial in Form von Metallblechen oder Metallbändem eingesetzt wird, das bereits eine Korrosionsschutzschicht trägt.

Es besteht daher Bedarf, einfachere Herstellungsverfahren zu finden, bei denen bereits vorbeschichtete Bleche geschweißt und in bewährter Weise elektrotauchlackiert werden können. So gibt es eine Reihe von Verfahren, bei denen im Anschluß an eine Phosphatierung und/oder Chromatierung im sogenannten Coil-Coating-Verfahren eine mehr oder weniger leitfähige organische Beschichtung aufgebracht wird. Dabei sollen diese organischen Beschichtungen in der Regel so beschaffen sein, daß sie genügende elektrische Leitfähigkeit besitzen, um automobiltypische Schweißverfahren, beispielsweise elektrische Punktschweißverfahren nicht zu beeinträchtigen. Außerdem sollen diese Beschichtungen mit herkömmlichen Elektrotauchlacken beschichtbar sein.

Insbesondere in der Automobilindustrie werden dabei in neuerer Zeit neben normalen Stahlblechen vermehrt auch die nach den verschiedensten Verfahren verzinkten und/oder legierungsverzinkten Stahlbleche, sowie Bleche aus Aluminium und Magnesium eingesetzt.

Die Beschichtung von Stahlblechen mit organischen Beschichtungen, die schweißbar sind und die direkt im Walzwerk nach dem sogenannten Coil-Coating-Verfahren aufgebracht werden, ist im Prinzip bekannt.

So beschreibt die DE-C-3412234 einen leitfähigen und schweißbaren Korrosionsschutzprimer für elektrolytisch dünnverzinktes, phosphatiertes oder chromatiertes und verformbares Stahlblech. Dieser Korrosionsschutzprimer besteht aus einer Mischung von über 60 % Zink, Aluminium, Graphit und/oder Molybdändisulfid sowie einem weiteren Korrosionsschutzpigment und 33 bis 35 % eines organischen Bindemittels sowie etwa 2 % eines Dispergierhilfsmittels oder Katalysators. Als organisches Bindemittel werden Polyesterharze und/oder Epoxidharze sowie deren Derivate vorgeschlagen. Es wird angenommen, daß diese Technologie die Grundlage des in der Industrie unter dem Namen "Bonazinc 2000" bekannten Beschichtungsmittels darstellt. Obwohl dieses Verfahren bereits einige Vorzüge gegenüber der eingangs geschilderten Vorgehensweise - vorübergehender Korrosionsschutz mit Korrosionsschutzölen, gefolgt von nachträglicher Entfettung nach dem Zusammenfügen der metallischen Bauteile - bietet, ist das in der DE-C-3412234 beschriebene Verfahren noch stark verbesserungsbedürftig:
- Die Einbrenntemperatur für derartige Beschichtungen liegt mit 250 bis 260 °C Peak Metal Temperature (PMT) noch zu hoch. Viele neuartige Stähle mit "Bake-Hardening"-Effekt können für derartig hohe Einbrenntemperaturen nicht eingesetzt werden.
- Die Beschichtung ist nicht ausreichend punktschweißbar.
- Das Beschichtungsmittel enthält große Mengen organischer Lösungsmittel.
- Die Lackhaftung auf den vorbehandelten Substraten, vorzugsweise verzinkte Stähle, ist nicht immer ausreichend, insbesondere wenn stärkere Umformungen der Bleche im Automobilpresswerk vorgenommen werden.

Gemäß der Lehre der DE-C-3412234 kann das organische Bindemittel aus Polyesterharzen und/oder Epoxidharzen sowie deren Derivaten bestehen. Konkret genannt werden ein Epoxid/Phenyl-Prekondensat, ein Epoxyester sowie lineare ölfreie Mischpolyester auf Basis Terephthalsäure.

Die EP-A-573015 beschreibt ein organisches beschichtetes Stahl-Verbundblech bestehend aus einer ein oder zweiseitig mit einer Zink oder Zinklegierung beschichteten Oberfläche, die mit einem Chromatfilm versehen ist und einer darauf befindlichen organischen Beschichtung mit einer Schichtstärke von 0,1 bis 5 µm. Die organische Beschichtung ist aus einer Primer-Zusammensetzung gebildet, die aus einem organischen Lösungsmittel, einem Epoxidharz mit einem Molekulargewicht zwischen 500 und 10.000, einem aromatischen Polyamin und einer Phenol- oder Cresolverbindung als Beschleuniger besteht. Weiterhin enthält die Primer-Zusammensetzung ein Polyisocyanat sowie kolloidale Kieselsäure. Gemäß der Lehre dieser Schrift wird die organische Beschichtung vorzugsweise in einer Trockenfilm-Schichtstärke von 0,6 bis 1,6 µm aufgebracht, da dünnere Schichten als 0,1 µm zu dünn sind um Korrosionsschutz zu bewirken. Schichtstärken über 5 µm beeinträchtigen jedoch die Schweißbarkeit. In analoger Weise beschreibt die DE-A-3640662 ein oberflächenbehandeltes Stahlblech, umfassend ein zinküberzogenes oder mit einer Zinklegierung überzogenes Stahlblech, einem auf der Oberfläche des Stahlbleches gebildeten Chromatfilm und einer auf dem Chromatfilm gebildeten Schicht einer Harzzusammensetzung. Diese Harzzusammensetzung besteht aus einem basischen Harz, das durch Umsetzung eines Epoxidharzes mit Aminen hergestellt wird sowie einer Polyisocyanatverbindung. Auch dieser Film darf nur in Trockenfilmstärken von kleiner als etwa 3,5 µm aufgebracht werden, weil bei höheren Schichtstärken die Schweißfähigkeit stark herabgesetzt ist.

Die EP-A-380 024 beschreibt organische Beschichtungsmaterialien auf der Basis eines Bisphenol-A-Typ-Epoxidharzes mit einem Molekulargewicht zwischen 300 und 100.000 sowie einem Polyisocyanat bzw. blockiertem Polyisocyanat, pyrogener Kieselsäure sowie mindestens einem organischen Farbpigment. Auch bei diesem Verfahren ist eine chromathaltige Vorbehandlung mit hoher Cr-Auflage erforderlich. Dabei darf die organische Schicht nicht dicker als 2 µm sein, da die Bleche mit dickeren organischen Schichten sich nicht befriedigend Punktschweißen lassen und die Eigenschaften des auf die organische Beschichtung aufgebrachten Elektrotauchlackes negativ beeinflußt werden.

Die WO 99/24515 offenbart eine leitfähige und schweißbare Korrosionsschutz-Zusammensetzung zur Beschichtung von Metalloberflächen, dadurch gekennzeichnet, daß sie
a) 10 bis 40 Gew.-% eines organischen Bindemittels enthaltend
   aa) mindestens ein Epoxidharz
   ab) mindestens einen Härter ausgewählt aus Guanidin, substituierten Guanidinen, substituierten Harnstoffen, cyclischen tertiären Aminen und deren Mischungen
   ac) mindestens ein blockiertes Polyurethanharz
b) 0 bis 15 Gew.-% eines Korrosionsschutzpigments auf Silicatbasis
c) 40 bis 70 Gew.-% pulverförmiges Zink, Aluminium, Graphit und/oder Molybdänsulfid, Ruß, Eisenphosphid
d) 0 bis 30 Gew.-% eines Lösungsmitttels enthalten.

Dieses Beschichtungsmittel wird bei Temperaturen zwischen 160 und 260 °C (Objekttemperatur, peak metal temperature = PMT) ausgehärtet. Diese Einbrenntemperatur ist zu hoch, um für die sogenannten Bake-Hardening-Stähle verwendet werden zu können.

Leitfahige Korrosionsschutzmittel sind schließlich auch aus DE-A-19 755 349 bekannt.

Es bestand also die Aufgabe, Beschichtungszusammensetzungen bereitzustellen, die den Anforderungen der Automobilindustrie in allen Punkten genügen. Im Vergleich zum bekannten Stand der Technik sollen die für das Coil-Coating-Verfahren geeigneten organischen Beschichtungszusammensetzungen in den folgenden Eigenschaften verbessert werden:
- niedrige Lösemittelmenge in dem Beschichtungsstoff
- niedrigere Einbrenntemperatur vorzugsweise nicht höher als 159 °C PMT
- deutliche Reduzierung des Weißrostes auf verzinktem Stahlblech im Salzsprühtest nach DIN 50021, d.h. besserer Korrosionsschutz
- Verbesserung der Haftung der organischen Beschichtung auf dem metallischen Subtrat gemäß einer Bewertung nach dem T-Bend-Test (ECCA-Norm) und Impact-Test (ECCA-Norm)
- Außenhautfähigkeit. (d.h. Verwendbarkeit als Außenblech einer Automobilkarosse)
- ausreichender Korrosionsschutz auch bei niedriger Cr-Auflage, vorzugsweise auch bei Cr-freien Vorbehandlungs-Verfahren.
- eine heute noch übliche Hohlraumversiegelung mit Wachs oder wachshaltigen Produkten kann wegen des verbesserten Korrosionsschutzes überflüssig werden
- ausreichende Eignung für automobiltypische Schweißverfahren

Die Erfindung betrifft ein Mittel zur Beschichtung von Metalloberflächen, das nach dem Aushärten eine elektrisch leitfähige und schweißbare Korrosionsschutzbeschichtung ergibt, das
a) 10 bis 30 Gew.-% eines organischen Bindemittels, das bei einer Objekttemperatur (peak metal temperature "PMT") von 130 bis 150 °C, vorzugsweise zwischen 135 und 150 °C aushärtet, und das ausgewählt ist aus Poly/Acrylat-Copolymer-Dispersionen, Polymethan/Polycarbonat-Dispersionen, Polyurethan/Polyester-Dispersionen und Acrylat-Copolymer-Dispersionen sowie Mischungen hiervon,
b) 30 bis 60 Gew.-% eines Pulvers einer elektrisch leitfähigen Substanz,
c) 10 bis 40 Gew.-% Wasser sowie
d) erwünschtenfalls insgesamt bis zu 50 Gew.-% weitere Wirk- und/oder Hilfsstoffe enthält und wobei sich die Mengen zu 100 Gew.-% addieren.

Zum Aushärten der Beschichtung auf dem Substrat wird das beschichtete Substrat so lange aufgeheizt, bis es eine Temperatur in dem genannten Bereich angenommen hat. Man bezeichnet diese höchste erreichte Temperatur des Substrats auch als "peak metal temperature = PMT". Dieses Aufheizen kann beispielsweise in einem beheizten Ofen, insbesondere in einem Durchlaufofen erfolgen, der in der Regel eine Temperatur deutlich oberhalb der PMT aufweisen muß und der vorzugsweise mit Umluft betrieben wird. Beispielsweise kann die Ofentemperatur bei 350 °C liegen, wobei die PMT über die Verweildauer des beschichteten Substrats in der Ofenzone gesteuert werden kann. Vorzugsweise verfährt man dabei so, daß man das Substrat nicht längere Zeit auf der PMT hält, sondern es nach Erreichen der PMT sofort abkühlen läßt. Hierfür können aktive Kühlmaßnahmen wie beispielsweise Abblasen mit Luft vorgesehen werden. Die Zeitdauer bis zum Erreichen der PMT kann dabei unter einer Minute, beispielsweise bei etwa 30 Sekunden liegen.

Dabei können die weiteren Wirk- und/oder Hilfsstoffe der Gruppe d) ausgewählt sein aus organischen Lösungsmitteln, Neutralisationsmitteln, Korrosionsschutzpigmenten, Verdickem, Entschäumem, Haftvermittlern und Verlaufmitteln. Dabei ist es bevorzugt, daß das Mittel nicht mehr als 15 Gew.-%, vorzugsweise nicht mehr als 10 Gew.-% organisches Lösungsmittel enthält. Das organische Lösungsmittel kann beispielsweise bestehen aus Glykolen, N-Methylpyrrolidon oder aus Gemischen hiervon. Demnach ist es bevorzugt, daß das Mittel einen größeren Gewichtsanteil Wasser als organisches Lösungsmittel enthält. Dem Wunsch nach Lösungsmittelarmut wird hiermit Rechnung getragen. Der vergleichsweise hohe Wassergehalt in dem Mittel erlaubt es, dieses durch weitere Wasserzugabe zu verdünnen. Das Mittel ist also wasserdispergierbar.

Die weiteren Wirk- oder Hilfsstoffe der Gruppe d) können weiterhin Gleitmittel, lösliche Farbstoffe, Farbpigmente, Netzmittel und Verlaufshilfsmittel umfassen. Als Verlaufshilfsmittel können Silane und/oder Siloxane eingesetzt werden. Beispiele geeigneter Silane ohne weitere funktionelle Gruppen sind Trimethoxymethylsilan, Isobutyltrimethoxysilan und n-Octyltriethoxysilan. Des weiteren können Aminogruppen-haltige Silane verwendet werden wie beispielsweise 3-Aminopropyltrimethoxysilan, 3-Aminopropyltriethoxysilan, 3-Aminopropylmethyldiethoxysifan und N-(2-Aminoethyl)-3-aminopropyltrimethoxysilan. Als Silane mit reaktiveren funktionellen Gruppen kommen Epoxisilane wie beispielsweise 3-Glycidoxipropyltrimethoxisilan, β(3,4-Epoxicyclohexyl)ethyltriethoxisilan in Betracht. Außerdem sind Silane mit reaktiven Doppelbindungen wie beispielsweise Methacryl-funktionelle Silane oder Vinylsilane wie beispielsweise Vinyltrimethoxisilan geeignet. Silane mit reaktiven Gruppen wirken nicht nur als Verlaufshilfsmittel, sondern zeigen auch haftvermittelnde Eigenschaften. Hierdurch wird nicht nur die Haftung der organischen Beschichtung auf dem Blech, sondern auch die Haftung zwischen der organischen Beschichtung und einem hierauf applizierten Klebstoff verbessert. Mit dem erfindungsgemäßen Mittel beschichtete Bleche oder Bauteile können also mit guten Haftungseigenschaften miteinander oder mit anderen Bauteilen verklebt werden. Dabei kann es vorteilhaft sein, die haftvemlittelnd wirkenden reaktiven Silane kurz vor der Anwendung des erfindungsgemäßen Mittels zur Beschichtung von Metalloberflächen in das Mittel einzuarbeiten. "Kurz vor" heißt dabei, bis zu einige Stunden vor der Durchführung der Beschichtung, zumindest am gleichen Tag, an dem die Beschichtung der Metalloberfläche durchgeführt wird. Vorzugsweise gibt man die Silane in Mengen von etwa 0,5 bis etwa 3 Gew.-% bezogen auf die Gesamtmenge des Mittels dem Mittel zu.

Als spezieller Wirkstoff der Gruppe d) können Korrosionsschutzpigmente in einer Menge von bis zu 15 Gew.-% vorliegen. Vorzugsweise sind die Korrosionsschutzpigmente Silicate, insbesondere calciumhaltige modifizierte Silicate.

Das Mittel enthält ein Pulver einer elektrisch leitfähiger, Substanz, das es erlaubt, die beschichteten Metalloberflächen elektrisch zu verschweißen und elektrophoretisch zu lackieren, beispielsweise durch kathodische Elektrotauchlackierung. Die elektrisch leitfähige Substanz ist vorzugsweise ausgewählt aus jeweils pulverförmigem Zink, Aluminium, Grafit, Ruß, Molybdänsulfid und/oder Eisenphosphid. Vorzugsweise wird pulverförmiges Eisenphosphid eingesetzt, das eine mittlere Korngröße von nicht mehr als 10 µm aufweist. Ein derartiges Pulver kann durch Vermahlen eines gröberteiligen Pulvers erhalten werden. Vorzugsweise liegt die mittlere Korngröße im Bereich von 2 bis 8 µm. Für die Bestimmung der Korngröße stehen bekannte Methoden wie beispielsweise Lichtstreuung oder Elektronenmikroskopie zur Verfügung.

Das organische Bindemittel kann aus den genannten unterschiedlichen Gruppen von Polymeren ausgewählt werden, sofern sich diese bei der genannten PMT von 130 bis 150 °C aushärten lassen. Die Hersteller derartiger Polymere geben über die erforderliche Härtungstemperatur Auskunft. Das organische Bindemittel a) ist ausgewählt aus Polyurethan/Acrylat-Copolymer-Dispersionen, Polyurethan/Polycarbonat-Dispersionen, Polyurethan/Polyester-Dispersionen und Acrylat-Copolymer-Dispersionen sowie Mischungen hiervon. Die verwendeten Polyurethane sind vorzugsweise vom Typ eines anionenaktiven aliphatischen Polycarbonats.

Das erfindungsgemäße Mittel ist besonders dafür geeignet, im sogenannten Coil-Coating-Verfahren eingesetzt zu werden. Hierbei werden Metallbänder kontinuierlich beschichtet. Das Mittel kann dabei nach unterschiedlichen Verfahren aufgetragen werden, die im Stand der Technik geläufig sind. Beispielsweise können Auftragswalzen verwendet werden, mit denen sich direkt die erwünschte Naßfilmdicke einstellen läßt. Alternativ hierzu kann man das Metallband in das Mittel eintauchen oder es mit dem Mittel besprühen.

Sofern Metallbänder beschichtet werden, die unmittelbar zuvor mit einer Metallauflage, beispielsweise mit Zink oder Zinklegierungen elektrolytisch oder im Schmelztauchverfahren überzogen wurden, ist eine Reinigung der Metalloberflächen vor dem Auftragen des Mittels nicht erforderlich. Sind die Metallbänder jedoch bereits gelagert worden und insbesondere mit Korrosionsschutzölen versehen, ist ein Reinigungsschritt notwendig. Das erfindungsgemäße Mittel kann unmittelbar auf die gereinigte oder aufgrund des Herstellprozesses blanke Metalloberfläche aufgetragen werden. Die erzielbare Korrosionsschutzwirkung läßt sich jedoch verbessern, wenn man die Metalloberfläche vor dem Auftragen des Mittels einer Korrosionsschutz-Vorbehandlung mit anorganischen Reagenzien unterzieht, wie sie im Stand der Technik als "Konversionsbehandlung" bekannt ist. Beispielsweise kann es sich hierbei um eine Phosphatierung handeln, insbesondere eine schichtbildende Zinkphosphatierung, eine Chromatierung oder eine Konversionsbehandlung mit chromfreien Behandlungsmitteln, beispielsweise auf Basis komplexer Fluoride von Titan und/oder Zirkon. Derartige Vorbehandlungsverfahren sind im Stand der Technik bekannt.

Das erfindungsgemäße Mittel wird vorzugsweise mit einer solchen Naßfilmdicke auf die Metalloberfläche aufgetragen, daß man nach dem Aushärten eine Schichtdicke im Bereich von etwa 1 bis etwa 10 µm erhält. Vorzugsweise werden Schichtdicken im Bereich von 6 bis 8 µm eingestellt. Demgemäß betrifft die Erfindung in einem weiteren Aspekt ein Verfahren zur Beschichtung von Metalloberflächen mit einer elektrisch leitfähigen organischen Korrosionsschutzschicht, wobei man die Metalloberflächen derart mit einem Mittel nach einem oder mehreren der Ansprüche 1 bis 6 beschichtet, daß man nach dem Aushärten eine Schichtdicke von 1 bis 10 µm, vorzugsweise von 6 bis 8 µm, erhält, und die beschichtete Metalloberfläche auf eine PMT im Bereich von 130 bis 150 °C erhitzt. Die bevorzugte PMT liegt im Bereich von 135 bis 150 °C.

Die zu beschichtenden Metalloberflächen können ausgewählt sein aus Oberflächen von Stahl, verzinktem oder legierungsverzinktem Stahl, aluminiertem, vorzugsweise feueraluminiertem Stahl, Aluminium oder Magnesium. Dabei werden unter "Aluminium" oder "Magnesium" die technisch üblichen Legierungen dieser Elemente verstanden, die in den betroffenen Anwendungsgebieten (Architekturbereich, Fahrzeugbau, Möbel- und Geräteindustrie) üblich sind. Bei metallbeschichteten Stählen kann die Metallbeschichtung durch die üblichen elektrolytischen oder Schmelztauchverfahren erfolgen.

Insbesondere ist das erfindungsgemäße Verfahren geeignet, sogenannte Bake-Hardening-Stähle mit einer elektrisch leitfähigen und schweißbaren Korrosionsschutzbeschichtung zu beschichten. Da solche Stähle bei zu hoher Objekttemperatur ihre Gefügestruktur und damit ihre gewünschten mechanischen Eigenschaften verändern, sind maximale Objekttemperaturen in einem Temperaturbereich erforderlich, in denen sich das erfindungsgemäße Mittel aushärten läßt.

Schließlich betrifft die Erfindung jeden Metallgegenstand mit einer Korrosionsschutzschicht, der nach dem erfindungsgemäßen Verfahren erhältlich ist. Dabei kann die erfindungsgemäß hergestellt Korrosionsschutzschicht auch mit weiteren Lackschichten überzogen sein.

Das erfindungsgemäße Mittel bzw. das erfindungsgemäße Beschichtungsverfahren erlaubt die Herstellung von Metallteilen, die eine elektrisch schweißbare und elektrolytisch überiackierbare Korrosionsschutzbeschichtung aufweisen, zu deren Aushärten keine höhere peak metal temperature als 150 °C erforderlich ist. Als elektrisch schweißbar werden die beschichteten Metallteile dann angesehen, wenn sie unter den üblichen Bedingungen der Fügetechnik in der Automobil- oder Haushaltsgeräteindustrie schweißbar, vorzugsweise nach dem Punktschweißverfahren schweißbar sind. Die erfindungsgemäßen Beschichtungen besitzen eine ausreichende elektrische Leitfähigkeit, um eine vollständige und störungsfreie Abscheidung von Elektrotauchlackierungen zu gewährleisten.

Bei der Verwendung der erfindungsgemäß beschichteten Metallteile beispielsweise im Fahrzeugbau und in der Haushaltsgeräteindustrie können chemische Behandlungsstufen für die Korrosionsschutzbehandlung der gefertigten Bauteile entfallen. Die zusammengefügten Bauteile, die die erfindungsgemäße Beschichtung tragen, können unmittelbar überlackiert werden. An Stellen, an den keine Überlackierung erfolgt, beispielsweise in Hohlräumen in Fahrzeugkarosserien, weisen die erfindungsgemäß beschichteten Metallteile eine ausreichend hohe Korrosionsbeständigkeit auf. Aufwendige Arbeitsschritte wie beispielsweise eine Hohlraumkonservierung können hierdurch entfallen. Dies vereinfacht zum einen die Fertigungsprozesse im Fahrzeugbau und führt gegenüber einer konventionellen Hohlraumversiegelung zu einer Gewichtserspamis und damit zu einem geringeren Treibstoffverbrauch.

Die nach dem erfindungsgemäßen Verfahren hergestellte leitfähige organische Schicht bietet die Basis für eine weitere Überlackierung, wie sie im allgemeinen im Metallbau üblich ist. Beispielsweise kann auf die leitfähige organische Schicht eine Pulverlackschicht aufgebracht werden. Damit betrifft die Erfindung in einem erweiterten Aspekt einen Metallgegenstand, der auf der Metalloberfläche ein Beschichtungssystem aus folgenden Einzelschichten aufweist:
a) Chemische Konversionsschicht,
b) Leitfähige organische Schicht einer Dicke von 1 bis 10 µm, die nach dem vorstehend beschriebenen Verfahren erhältlich ist, enthaltend mindestens ein organisches Bindemittel und eine elektrisch leitfähige Substanz,
c) Pulverlackschicht mit einer Dicke von 70 bis 120 µm.

Eine Pulverlackierung ist insbesondere beim Maschinenbau, bei Metallteilen für den Innenausbau von Gebäuden, in der Möbel- und Haushaltsgeräteindustrie üblich. Im Fahrzeugbau bevorzugt man derzeit wegen der höheren mechanischen und korrosiven Beanspruchtung ein Mehrschichtsystem, bei dem auf eine chemische Konversionsschicht eine unterschiedliche Abfolge organischer Beschichtungen folgt. In diese Abfolge kann eine leitfähige organische Schicht als erste organische Schicht oberhalb der Konversionsschicht folgen. Hierauf kann ein im Vergleich zum bisherigen Stand der Technik vereinfachter Schichtaufbau aus einem Elektrotauchlack und einem ein- oder zweischichtigen Decklack folgen. Da das Grundmaterial bereits mit der leitfähigen organischen Schicht angeliefert wird, vereinfachen sich beim Hersteller der Fahrzeuge die bisher erforderlichen Schritte zum Erzeugen der chemischen Konversionsschicht und dem Aufbringen der verschiedenen organischen Überzüge.

Die vorliegende Erfindung umfaßt damit ebenfalls einen Metallgegenstand, der auf der Metalloberfläche ein Beschichtungssystem aus folgenden Einzelschichten aufweist:
a) Chemische Konversionsschicht,
b) Leitfähige organische Schicht einer Dicke von 1 bis 10 µm, die nach dem vorstehend beschriebenen Verfahren erhältlich ist, enthaltend mindestens ein organisches Bindemittel und eine elektrisch leitfähige Substanz,
c) Elektrotauchlack einer Dicke von 25 bis 35 µm.
d) ein- oder zweischichtiger Decklack.

Bisher war es im Stand der Technik nicht üblich, einen Elektrotauchlack auf eine organische Schicht aufzubringen. Erfindungsgemäß ist vorgesehen, daß der Elektrotauchlack mit einer Dicke im Bereich von 25 bis 35 µm auf die leitfähige organische Schicht aufgebracht wird. Dies ist eine deutlich höhere Schichtdicke als im Stand der Technik üblich, wo ein Elektrotauchlack einer Dicke im Bereich von 20 µm direkt auf einer chemischen Konversionsschicht abgeschieden wird. Im bisherigen Stand der Technik folgt auf den Elektrotauchlack ein Füller und erst dann ein ein- oder zweischichtiger Decklack. Gemäß der vorliegenden Erfindung kann der Füller eingespart werden, da dessen Funktion (insbesondere die Erhöhung der Steinschlagfestigkeit) von dem Elektrotauchlack übernommen wird. Daher kann ein Lackierschritt eingespart werden. Darüber hinaus ist das gesamte Beschichtungssystem gemäß der vorliegenden Erfindung dünner als im Stand der Technik üblich. Hierdurch wird Material eingespart, was zu ökonomischen und ökologischen Vorteilen führt.

Der Decklack kann ein- oder zweischichtig ausgeführt sein. Bei zweischichtiger Ausführung besteht er aus einem sogenannten Basecoat, der vor allem für den optischen Eindruck des Beschichtungssystems sorgt, und einem Clearcoat, der im wesentlichen Schutzfunktion hat und durch den der Basecoat sichtbar ist.

In den beiden vorstehend beschriebenen Fällen kann es sich bei der chemischen Konversionsschicht um eine Beschichtung handeln, die durch eine weiter oben beschriebene Konversionsbehandlung erzeugt wird, beispielsweise durch eine Phosphatierung, eine Chromatierung oder eine Konversionsbehandlung mit chromfreien Behandlungsmitteln.

Die Erfindung umfaßt ebenfalls die Verfahren zur Beschichtung eines Metallgegenstands, die zu den vorstehend beschriebenen Metallgegenständen führen.

Zum einen betrifft dies ein Verfahren zur Beschichtung eines Metallgegenstands, dadurch gekennzeichnet, daß man auf zumindest einem Teil der Oberfläche des Metallgegenstands nacheinander folgende Schichten aufbringt:
a) Chemische Konversionsschicht,
b) Leitfähige organische Schicht einer Dicke von 1 bis 10 µm, die nach dem vorstehend beschriebenen Verfahren erhältlich ist, enthaltend mindestens ein organisches Bindemittel und eine elektrisch leitfähige Substanz,
c) Pulverlackschicht mit einer Dicke von 70 bis 120 µm.

Weiterhin betrifft dies ein Verfahren zur Beschichtung eines Metallgegenstands, dadurch gekennzeichnet, daß man auf zumindest einem Teil der Oberfläche des Metallgegenstands nacheinander folgende Schichten aufbringt:
a) Chemische Konversionsschicht,
b) Leitfähige organische Schicht einer Dicke von 1 bis 10 µm, die nach dem vorstehend beschriebenen Verfahren erhältlich ist, enthaltend mindestens ein organisches Bindemittel und eine elektrisch leitfähige Substanz,
c) Elektrotauchlack einer Dicke von 25 bis 35 µm,
d) ein- oder zweischichtiger Decklack.

Für die einzelnen Schichten a) bis d) gelten hierbei die vorstehenden Erläuterungen.

Die folgenden Tabellen zeigen Beispiele für erfindungsgemäße Mittel. Zusätzlich zur stofflichen Zusammensetzung in Gew.-% sind die prozentualen Anteile für den gesamten Festkörpergehalt des Beschichtungsmittels angegeben, wobei der Festkörperanteil zusätzlich untergliedert ist in Anteil Bindemittel und Anteil Pigmente. Pigmente sind die anorganischen Feststoffe, die die Beschichtungsmittel enthalten. Die Mittel werden vorzugsweise so formuliert, daß sich ein Quotient der prozentualen Anteile von Pigmente und Bindemittel im Bereich zwischen 3 und 5 ergibt.

Weiterhin enthalten die Tabellen die Ergebnisse von Korrosionsschutz- und Lackhaftungsprüfungen an Probeblechen, die mit dem jeweiligen Mittel beschichtet wurden.

Hierzu wurden 0,8 mm starke elektrolytisch verzinkte Stahlbleche (ZE 50/50) in üblicher Weise mit einer silicathaltigen no rinse Chromatierung mit Granodine^{R} 1415 A (Fa. Henkel) versehen und anschließend mit den erfindungsgemäßen organischen leitfähigen Beschichtungen beschichtet, so daß eine Trockenfilmstärke von etwa 7 µm entstand. Die peak metal temperature betrug etwa 150° C. Anschließend wurden die so beschichteten Bleche teilweise (siehe Tabelle) mit einer herkömmlichen KTL-Beschichtung versehen, worauf diese gemäß Stand der Technik ausgehärtet wurde.

Wie aus den Testergebnissen in den Tabellen ersichtlich ist, bewirken alle erfindungsgemäßen Beschichtungen einen ausgezeichneten Korrosionsschutz. Außerdem sind die erfindungsgemäßen organischen Beschichtungen gegen die Standardlösungsmittel (Methylethylketon) hinreichend beständig, wie aus dem MEK-Test ersichtlich ist.

Dabei wurden folgende spezielle Prüfverfahren verwendet:
DBL 4062 (Liefervorschrift von Daimler Chrysler)
   Ein dicht gepreßter Punktflansch, KTL-beschichtet ohne Abdichtung und Konservierung wird einem Wechselklimatest nach VDA 621-415 über 10 Zyklen unterzogen. Anschließend wird der Flansch geöffnet und die Menge Rotrost wird beurteilt. r0 bedeutet Freiheit von Rotrost im geöffneten Flansch.
GFT-BQ V-Nr.: 24 (Prüfvorschrift der Firma Krupp Hoesch Stahl)
   Es wird eine Haftungsprüfung analog ECCA-T5 durchgeführt. Hierfür wird eine Probe so in das Prüfgerät gelegt, daß die zu prüfende beschichtete Seite nach unten zeigt. Von oben wird eine Metallkugel mit einem Gewicht von 2 kg aus einem Meter Höhe auf die Probe fallengelassen. Hierdurch entsteht eine Kuppe auf der Beschichtungsseite, auf die ein Klebeband ausgelegt und bei leichter Drehbewegung mit den Kuppen des Daumens und 2 Fingern mit mittlerer Kraftanwendung angedrückt und dann ruckartig abgerissen wird. Zur Beurteilung der abgeplatzten Lackmenge wird das Klebeband auf ein weißes Papier geklebt. Die Lackabplatzung wird anhand einer Vergleichsskala mit Noten bewertet, wobei die Note 1 (keine Lackablösung) den besten Wert, die Note 4 den schlechtesten Wert darstellt.

Das Prinzip des Tests beruht darauf, durch Wischen mit einem getränkten Lappen festzustellen, in wieweit Lackschichten gegen das Lösemittel Methylethylketon beständig sind, was in gewisser Weise von der Vernetzung des Lacksystems abhängig ist.

Die Prüfung wird mit Verbandwatte DAB 7/V-DIN 61640/Bw ZW durchgeführt. Die Gazeschicht der Watte ist von der Seite, mit der geprüft werden soll, zu entfernen. Die Watte wird um den Fuß eines 1100 - 1200 g schweren Hobels gelegt und von einer Klammer gehalten. In den Hobel ist eine Bohrung, die einen Vorrat MEK aufnehmen und langsam an die Watte abgeben kann. Es ist darauf zu achten, daß die Watte während der gesamten Prüfung naß ist. Der Hobel wird auf der zu prüfenden Oberfläche hin und her geschoben, wobei eine Hin- und Rückbewegung ein Doppelhub ist. In einer Sekunde ist ein Doppelhub auszuführen; die Prüfstrecke soll 25 cm lang sein.

### Wichtig: Auf den Hobel darf unter keinen Umständen Kraft ausgeübt werden!

Der obere und untere Umkehrpunkt wird auf einer Strecke von 4 cm nicht bewertet, d. h.: von der 25 cm langen Prüfstrecke wird oben und unten eine Strecke von 4 cm abgezogen.

Bestimmt wird die Anzahl der Doppelhübe des Hobels, bis die Beschichtung so weit entfernt ist, daß der Untergrund sichtbar wird. In den Ausführungsbeispielen wird der Untergrund auch nach 10 Doppelhüben noch nicht sichtbar.

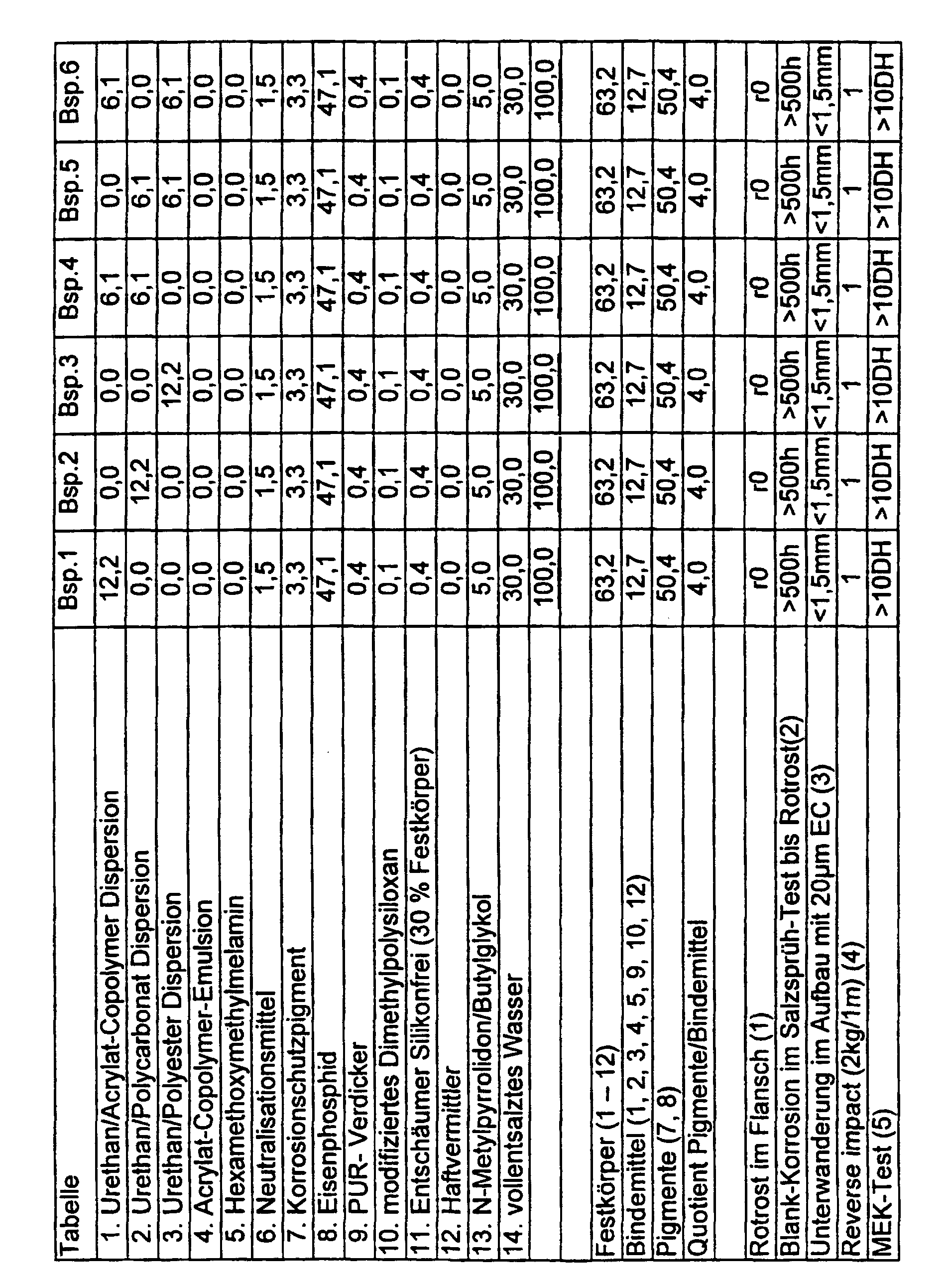

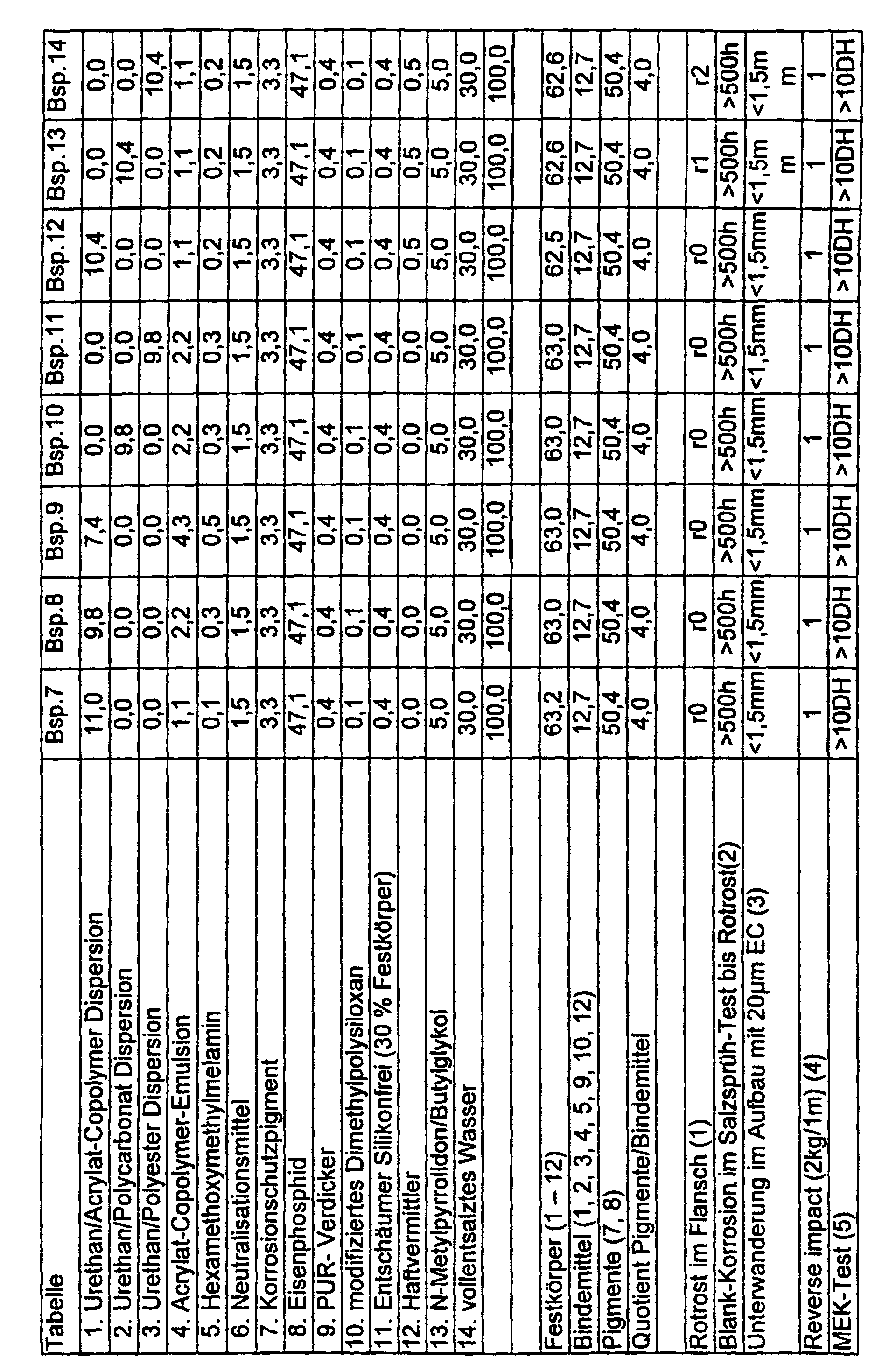

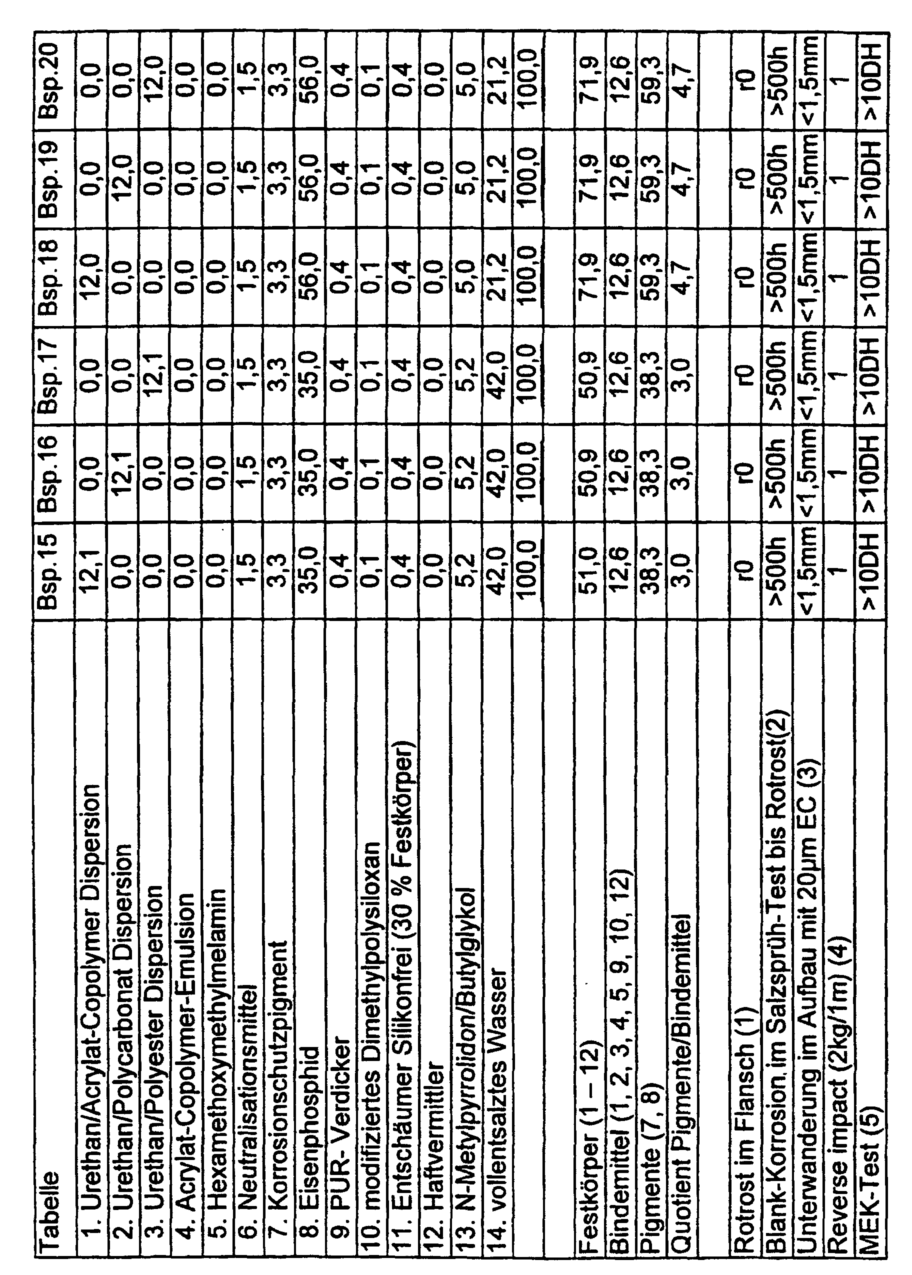

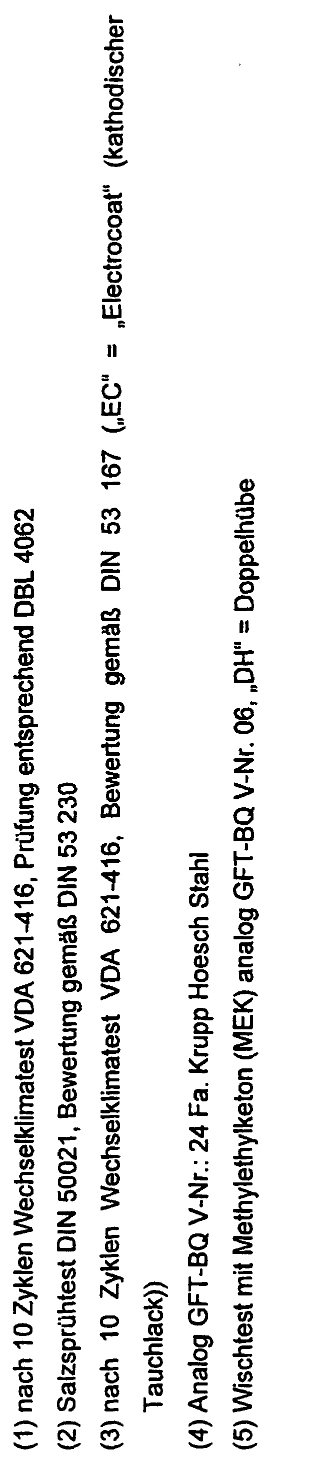

## Patentansprüche

1. Mittel zur Beschichtung von Metalloberflächen, das nach dem Aushärten eine elektrisch leitfähige und schweißbare Korrosionsschutzbeschichtung ergibt, das
a) 10 bis 30 Gew.-% eines organischen Bindemittels, das bei einer Objekttemperatur (peak metal temperature "PMT") von 130 bis 150 °C aushärtet und das ausgewählt ist aus Polyurethan/Acrylat-Copolymer-Dispersionen, Polyurethan/Polycabonat-Dispersionen, Polyurethan/Polyester-Dispersionen und Acrylat-Copolymer-Dispersionen sowie Mischungen hiervon,
b) 30 bis 60 Gew.-% eines Pulvers einer elektrisch leitfähigen Substanz,
c) 10 bis 40 Gew.-% Wasser sowie
d) erwünschtenfalls insgesamt bis zu 50 Gew.-% weitere Wirk- und/oder Hilfsstoffe
enthält und wobei sich die Mengen zu 100 Gew.-% addieren.

2. Mittel nach Anspruch 1, **dadurch gekennzeichnet, daß** die weiteren Wirk- und/oder Hilfsstoffe d) ausgewählt sind aus organischen Lösungsmitteln, Neutralisationsmitteln, Korrosionsschutzpigmenten, Verdickern, Entschäumern, Haftvermittlem und Verlaufsmitteln.

3. Mittel nach Anspruch 2, **dadurch gekennzeichnet, daß** es als Wirk- und/oder Hilffstoff d) nicht mehr als 15 Gew.-%, vorzugsweise nicht mehr als 10 Gew.-% organisches Lösungsmittel enthält.

4. Mittel nach einem oder mehreren der Ansprüche 1 bis 3, **dadurch gekennzeichnet, daß** als elektrisch leitfähige Substanz b) pulverförmiges Zink, Aluminium, Graphit, Ruß, Molybdänsulfid und/oder Eisenphosphid enthält.

5. Mittel nach Anspruch 4, **dadurch gekennzeichnet, daß** es als elektrisch leitfähige Substanz b) pulverförmiges Eisenphosphid enthält, das eine mittlere Korngröße von nicht mehr als 10 µm aufweist.

6. Verwendung des Mittels nach einem oder mehreren der Ansprüche 1 bis 5 zum Beschichten von Metallbändern im Coil-Coating-Verfahren.

7. Verfahren zur Beschichtung von Metalloberflächen mit einer elektrisch leitfähigen organischen Korrosionsschutzschicht, wobei man die Metalloberflächen derart mit einem Mittel nach einem oder mehreren der Ansprüche 1 bis 5 beschichtet, daß man nach dem Aushärten eine Schichtdicke von 1 bis 10 µm erhält, und die beschichtete Metalloberfläche auf eine PMT im Bereich von 130 bis 150 °C erhitzt.

8. Verfahren nach Anspruch 7, **dadurch gekennzeichnet, daß** die Metalloberflächen ausgewählt sind aus Oberflächen von Stahl, verzinktem oder legierungsverzinktem Stahl, aluminiertem Stahl, Aluminium oder Magnesium.

9. Metallgegenstand mit einer Korrosionsschutzschicht, der nach dem Verfahren nach Anspruch 7 oder 8 erhältlich ist.

10. Metallgegenstand, der auf der Metalloberfläche ein Beschichtungssystem aus folgenden Einzelschichten aufweist:
a) Chemische Konversionsschicht,
b) Leitfähige organische Schicht einer Dicke von 1 bis 10 µm, die nach dem Verfahren nach einem oder beiden der Ansprüche 7 und 8 erhältlich ist,
c) Pulverlackschicht mit einer Dicke von 70 bis 120 µm.

11. Metallgegenstand, der auf der Metalloberfläche ein Beschichtungssystem aus folgenden Einzelschichten aufweist:
a) Chemische Konversionsschicht,
b) Leitfähige organische Schicht einer Dicke von 1 bis 10 µm, die nach dem Verfahren nach einem oder beiden der Ansprüche 7 und 8 erhältlich ist,
c) Elektrotauchlack einer Dicke von 25 bis 35 µm,
d) ein- oder zweischichtiger Decklack.

12. Verfahren zur Beschichtung eines Metallgegenstands, **dadurch gekennzeichnet, daß** man auf zumindest einem Teil der Oberfläche des Metallgegenstands nacheinander folgende Schichten aufbringt:
a) Chemische Konversionsschicht,
b) Leitfähige organische Schicht einer Dicke von 1 bis 10 µm, die nach dem Verfahren nach einem oder beiden der Ansprüche 7 und 8 erhältlich ist,
c) Pulverlackschicht mit einer Dicke von 70 bis 120 µm.

13. Verfahren zur Beschichtung eines Metallgegenstands, **dadurch gekennzeichnet, daß** man auf zumindest einem Teil der Oberfläche des Metallgegenstands nacheinander folgende Schichten aufbringt:
a) Chemische Konversionsschicht,
b) Leitfähige organische Schicht einer Dicke von 1 bis 10 µm, die nach dem Verfahren nach einem oder beiden der Ansprüche 7 und 8 erhältlich ist,
c) Elektrotauchlack einer Dicke von 25 bis 35 µm,
d) ein- oder zweischichtiger Decklack.

## Claims

1. A composition for coating metal surfaces which, after curing, gives an electrically conductive and weldable anticorrosion coating, **characterized in that** it contains
a) 10 to 30% by weight of an organic binder which cures at a substrate temperature (peak metal temperature "PMT") of 130 to 150°C and which is selected from polyurethane/acrylate copolymer dispersions, polyurethane/polycarbonate dispersions, polyurethane/polyester dispersions and acrylate copolymer dispersions and mixtures thereof.
b) 30 to 60% by weight of a powder of an electrically conductive substance,
c) 10 to 40% by weight of water and
d) if desired, a total of up to 50% by weight of other active substances and/or auxiliaries,
the quantities adding up to 100% by weight.

2. A composition as claimed in claim 1, **characterized in that** the other active substances and/or auxiliaries d) are selected from organic solvents, neutralizing agents, corrosion-inhibiting pigments, thickeners, defoamers, coupling agents and flow control agents.

3. A composition as claimed in claim 2, **characterized in that** it contains no more than 15% by weight and preferably no more than 10% by weight of organic solvent as the active substance and/or auxiliary d).

4. A composition as claimed in one or more of claims 1 to 3, **characterized in that** it contains powder-form zinc, aluminium, graphite, carbon black, molybdenum sulfide and/or iron phosphide as the electrically conductive substance b).

5. A composition as claimed in claim 4, **characterized in that** it contains powder-form iron phosphide with a mean particle size of no more than 10 µm as the electrically conductive substance b).

6. The use of the composition claimed in one or more of claims 1 to 6 for coil coating.

7. A process for coating metal surfaces with an electrically conductive organic anticorrosion layer, **characterized in that** the metal surfaces are coated with the composition claimed in one or more of claims 1 to 5 in such a way that a layer thickness of 1 to 10 µm is obtained after curing and **in that** the coated metal surface is heated to a PMT of 130 to 150°C.

8. A process as claimed in claim 7, **characterized in that** the metal surfaces are selected from surfaces of steel, galvanized or alloy-galvanized steel, aluminized steel, aluminium or magnesium.

9. A metal articles with an anticorrosion layer obtainable by the process claimed in claim 7 or 8.

10. A metal article with a coating system of the following individual layers on the metal surface:
a) chemical conversion layer,
b) conductive organic layer 1 to 10 µm thick obtainable by the process claimed in one or both of claims 7 and 8,
c) powder coating 70 to 120 µm thick.

11. A metal article with a coating system of the following individual layers on the metal surface:
a) chemical conversion layer,
b) conductive organic layer 1 to 10 µm thick obtainable by the process claimed in one or both of claims 7 and 8,
c) electrodeposition paint 25 to 35 µm thick,
d) one-layer or two-layer finishing paint.

12. A process for coating a metal article, **characterized in that** the following layers are successively applied to at least part of the surface of the metal article:
a) chemical conversion layer,
b) conductive organic layer 1 to 10 µm thick obtainable by the process claimed in one or both of claims 7 and 8,
c) powder coating 70 to 120 µm thick.

13. A process for coating a metal articles, **characterized in that** the following layers are successively applied to at least part of the surface of the metal article:
a) chemical conversion layer,
b) conductive organic layer 1 to 10 µm thick obtainable by the process claimed in one or both of claims 7 and 8,
c) electrodeposition paint 25 to 35 µm thick,
d) one-layer or two-layer finishing paint.

## Revendications

1. Agent pour l'enduction de surfaces métalliques, qui confère, après le durcissement, une couche de protection contre la corrosion électriquement conductrice et apte à être soudée, qui contient
a) à concurrence de 10 à 30 % en poids, un liant organique qui durcit à une température de l'objet (température pic-métal « PMT ») de 130 à 150 °C et qui est choisi parmi le groupe comprenant des dispersions de copolymères de polyuréthane/acrylate, des dispersions de polyuréthane/polycarbonate, des dispersions de polyuréthane/polyester et des dispersions de copolymères d'acrylate, ainsi que leurs mélanges,
b) à concurrence de 30 à 60 % en poids, une poudre d'une substance électriquement conductrice,
c) à concurrence de 10 à 40 % en poids, de l'eau, et
d) si on le souhaite, au total jusqu'à concurrence de 50 % en poids, d'autres substances actives et/ou d'autres adjuvants,
les quantités s'additionnant pour obtenir 100 % en poids.

2. Agent selon la revendication 1, **caractérisé en ce que** les autres substances actives et/ou les autres adjuvants d) sont choisis parmi le groupe comprenant des solvants organiques, des agents de neutralisation, des pigments de protection contre la corrosion, des épaississants, des agents anti-mousse, des promoteurs d'adhérence et des agents de nivellement.

3. Agent selon la revendication 2, **caractérisé en ce qu'**il contient, à titre de substances actives et/ou d'adjuvants d) un solvant organique en une quantité qui n'est pas supérieure à 15 % en poids, de préférence qui n'est pas supérieure à 10 % en poids.

4. Agent selon une ou plusieurs des revendications 1 à 3, **caractérisé en ce qu'**il contient, à titre de substance électriquement conductrice b), du zinc, de l'aluminium, du graphite, du noir de carbone, du sulfure de molybdène et/ou du phosphure de fer, pulvérulents.

5. Agent selon la revendication 4, **caractérisé en ce qu'**il contient, à titre de substance électroconductrice b) du phosphure de fer pulvérulent qui présente une granulométrie moyenne qui n'est pas supérieure à 10 µm.

6. Utilisation de l'agent selon une ou plusieurs des revendications 1 à 5, pour l'enduction de rubans métalliques dans le procédé de prélaquage en continu.

7. Procédé pour l'enduction de surfaces métalliques avec une couche organique électriquement conductrice de protection contre la corrosion, dans lequel on enduit les surfaces métalliques avec un agent selon une ou plusieurs des revendications 1 à 5, de telle sorte qu'après le durcissement, on obtient une épaisseur de couche de 1 à 10 µm, et on chauffe la surface métallique enduite à une température pic-métal dans la plage de 130 à 150 °C.

8. Procédé selon la revendication 7, **caractérisé en ce que** les surfaces métalliques sont choisies parmi le groupe comprenant des surfaces d'acier, d'acier zingué ou d'acier allié zingué, d'acier aluminé, d'aluminium ou de magnésium.

9. Objet métallique comprenant une couche de protection contre la corrosion que l'on obtient conformément au procédé selon la revendication 7 ou 8.

10. Objet métallique qui présente, sur la surface métallique, un système d'enduction constitué par les couches individuelles suivantes :
a) une couche de conversion chimique,
b) une couche organique conductrice possédant une épaisseur de 1 à 10 µm que l'on obtient conformément au procédé selon l'une quelconque des revendications 7 et 8 ou selon les deux,
c) une couche de peinture pour revêtement électrostatique possédant une épaisseur de 70 à 120 µm.

11. Objet métallique qui présente, sur la surface métallique, un système d'enduction constitué par les couches individuelles suivantes :
a) une couche de conversion chimique,
b) une couche organique conductrice possédant une épaisseur de 1 à 10 µm que l'on obtient conformément au procédé selon l'une quelconque des revendications 7 et 8 ou selon les deux,
c) une couche de peinture électrophorétique par immersion possédant une épaisseur de 25 à 35 µm,
d) une ou deux couches de peinture de finition.

12. Procédé pour l'enduction d'un objet métallique, **caractérisé en ce qu'**on applique, sur au moins une partie de la surface de l'objet métallique, les couches successives suivantes :
a) une couche de conversion chimique,
b) une couche organique conductrice possédant une épaisseur de 1 à 10 µm que l'on obtient conformément au procédé selon l'une quelconque des revendications 7 et 8 ou selon les deux,
c) une couche de peinture pour revêtement électrostatique possédant une épaisseur de 70 à 120 µm.

13. Procédé pour l'enduction d'un objet métallique, **caractérisé en ce qu'**on applique, sur au moins une partie de la surface de l'objet métallique, les couches successives suivantes :
a) une couche de conversion chimique,
b) une couche organique conductrice possédant une épaisseur de 1 à 10 µm que l'on obtient conformément au procédé selon l'une quelconque des revendications 7 et 8 ou selon les deux,
c) une couche de peinture électrophorétique par immersion possédant une épaisseur de 25 à 35 µm,
d) une ou deux couches de peinture de finition.
